# EUROPEAN PATENT SPECIFICATION

(11) **EP 0 587 927 B1**
(45) Date of publication and mention of the grant of the patent: **21.08.1996**
(21) Application number: 92115752.5
(22) Date of filing: 15.09.1992
(51) Int. Cl.: B62K 19/16, B29C 45/14

(54) **Composite material bicycle frame and method for making same**
Fahrradrahmen aus Verbundmaterial und Verfahren zu seiner Herstellung
Cadre d'une bicyclette en matériau composite et procédé pour sa fabrication

(43) Date of publication of application: 23.03.1994
(73) Proprietor: NYTEX COMPOSITES CO., LTD., Peitou Hsiang, Changhwa Hsien (TW)
(72) Inventor: Chen, Hsun-Sen, Taipei (TW); Chen, Chung-Ming, Taipei (TW)
(74) Representative: Grünecker, Kinkeldey, Stockmair & Schwanhäusser Anwaltssozietät

(56) References cited:
- EP-A- 0 125 735
- DE-U- 9 004 518
- GB-A- 2 248 807

## Description

The present invention relates to a method for making a bicycle frame as set forth in the preambles of claims 1 and 12, respectively, and to a bicycle frame made from a polymer composite composition material.

From GB-A-2248807 a composite plastic bicycle frame made of junction members and tube members is known wherein the junction members are partially made of a plastic material and the tubes are made from plastic material. The junction members have protruding insert pieces, each having a first section of large cross-section, a second section of small cross-section and a shoulder formation between the first and second sections. The second section is inserted into the tapered joint end of each tube which in turn bears against the shoulder formation. A resin-coated fabric material wraps around the larger section and the tapered joint end. The wrapping material and the joined parts of the tube end and of the insert piece are cohesively bonded together after the application of heat. The junction members comprise metallic tubular members in their centre for reinforcement purposes. Some of those tubes protrude so as to form connection elements.

From EP-A-0125735 a method of manufacturing a bicycle frame and a frame thus manufactured are known according to which the permanent connection of the ends of at least two already finished metal tubes, the ends of those tubes and a metal insert are placed in the correct relative positions in a mould, in particular an injection moulding mould, whereby the tube ends abut against the metal insert. The mould is then closed around the ends of the tubes and the mould is filled with liquid plastics material, so that after the setting of the plastics material and the opening of the mould, the ends of the tubes are joined together by a lug of plastics material with, therein, a metal insert.

From DE-U-9004518 a bicycle frame made from a composite fibre material is known in which the tubes of the frame and the junction element joining the tube ends are made from such composite fibre material.

### BACKGROUND OF THE INVENTION

Conventionally, a bicycle frame is made by soldering, welding or riveting joint fittings on tubes and this is usually a high temperature process. During such a high temperature assembly process, stress concentrations and unexpected deformations are always encountered. Such situations deteriorate the quality of the bicycle frame. Experienced workers are the only solution to such a quality problem. Thus, new manufacturing processes which are not so time- consuming and experience-dependent are required to overcome this a problem.

Several processes for manufacturing bicycle frames were thus developed to overcome such a problem. Among these processes, US Patent Nos. 4,986,949, 4,982,975, 4,941,674, 4,889,355, 4,850,607, 4,513,986 and 7,923,203 all disclose a single piece bicycle frame made of a thermosetting plastic material. There is also disclosed a bicycle frame made of thermosetting plastic, prepregged carbon fiber tubes or carbon fiber reinforced metal tubes. These tubes are joined together with metal lugs which are bonded on the tubes with adhesive agents. This kind of bicycle frame is taught by US Patent Nos. 4,437,679, 4,657,795 and 4,047,731. In addition, US Patent Nos. 4,900,050, 4,900,048 and 4,493,749 use prepreg tapes to wind around carbon fiber tubes and the lugs thereof and then curing the prepreg tapes by heating to form junctions of a bicycle frame.

In US Patent Nos. 4,548,422 and 4,230332, a bicycle frame made of a sandwiched structure is disclosed. The sandwiched structure is made by filling the gap between two parallel plates with a foam material. US Patent No. 4,856,800 discloses a bicycle frame made of fiberglass reinforced plastic tubes joined by lugs made of thin metal tube. A sheet molding compound is used to completely cover the junction portion between the lugs and the fiberglass reinforced plastic tubes to provide a stronger structure.

US Patent No. 3,833,242 discloses a single piece plastic molding bicycle frame with a structural foam interior. This kind of bicycle frame has no inter-tube junction member. US Patent No. 4,541,649 discloses a bicycle frame wherein a first tube has a flared end in contact with the outer surface of a second tube and an injection-molded plastic casing is used to fully surround the joint portion.

Although these prior art methods, to some extent, can overcome the problem mentioned at the very beginning, they still take a great amount of time in order to complete a manufacturing cycle. For example, the time required to bond the fiber tubes on the metal lugs is usually quite long and sometimes the adhesive agents used to bond the tubes and the lugs may leak out, resulting in taking much time to have it cleaned. Besides, these methods usually require special jigs in manufacturing. Thus, such prior art methods are still time- and labor-consuming methods.

### OBJECTS OF THE INVENTION

It is the object of the present invention to provide a bicycle frame and the method for making the same which will overcome the quality, time and labor problems occurring in the prior art, and in particular overcome the adhesive agent leaking and soiling problems and thus requiring no special process and time to have the adhesive agent cured, and require no special purpose jigs in manufacturing.

This object is attained by the features of claim 1 and claim 12, respectively. Preferred embodiments of the method and the bicycle frame are subject matter of the respective dependent claims.

In accordance with an aspect of the present invention, the junction members for the bicycle frame may be made of a high strength polymer composite material. In the first step, the composite polymer material is used to make a three-branched steering junction member, a four-branched seat junction member and a five-branched bottom bracket junction member by an injection molding process. These junction members are then used to joint tubes to form the bicycle frame. The junction members are secured on the tubes by any known means, such as tight fit, adhesive bonding, threaded engagement and riveting and then, in the second step, fully covered with injection-molded casings to eliminate sharp corners and to avoid stress concentration and also to beautify the out-looking thereof.

Suitable composite materials which comprise the junction members include, but not limited to, high stiffness and high impact strength engineering plastics made of polyamide (PA), polycarbonate (PC), polyethylene terephthalate (PET), polyoxymethylene (POM), polyphenulene sulfide (PPS), polyetherimide (PEI), polybutylene terephthalate (PBT), polyetherether ketone (PEEK), polyphenylene oxide (PPO), polysulfone (PSU), polyethersulfone (PES) and the like, reinforced with non-organic fibers, such as fiberglass, boron fiber and whisker, or organic fibers, such as carbon or graphite fiber, aramid fiber and synthetic fibers, the length of which is 1 to 30 mm, preferably larger than about 3 mm and more preferably between 6-10 mm and more preferably between about 6 mm to about 8 mm, such a composite material may further comprising liquid crystal polymer (LCP), such as sold under the trade names vectra, econol, rodran, novaccurate, xydar, victrex and the like of polyesters or polyblend or polyalloy made of, for example, LCP and PA to provide a self-reinforcement and a low specific gravity. Thus, such a composite materials has both high stiffness and light weight and also is substantially invariant in dimensions.

In accordance with another aspect of the present invention, the three-branched steering junction member, the four-branched seat junction member and the five-branched bottom bracket junction member may also serve as inward leaking prevention means which prevents the melt plastics of the second mold-injection which is to form the casings surrounding the junction members from flowing into the tubular connecting between the junction members.

In accordance with the present invention, each of the three-branched steering junction member, the four-branched seat junction member and the five-branched bottom bracket junction member may have tubular extensions to joint the tubular members. The jointing can be done by tight fit between the tubular members and the tubular extensions of the junction members, namely to forcibly insert the tubular extensions into the tubular members to have them frictionally engage with each other, or by forming adhesive agent coatings between the tubular extensions of the junction members and the tubular members to bond them together, or by riveting, or by a combination of these methods. The second mold-injection is then conducted to have the junction members fully surrounded by the casings. In accordance with the present invention, the second mold-injection is conducted at a temperature slightly higher than or equal to the mold-injection that is used to make the junction members to have the junction members and the casing slightly fused together. By doing so, the rivets or adhesive agent coatings that used to joint the tubular members and the tubular extensions of the junction members are fully covered by the injection-molded casings and thus providing the bicycle frame with a beautiful smooth outer surface.

In accordance with a further aspect of the present invention, suitable materials for making the tubular members which are used to connect the junction members together include, but not limited to, metal materials, such as aluminum alloys, Cr-Mo steels, titanium alloys and the like, or fiber reinforced plastic composite materials, such as fiberglass reinforced plastics, carbon fiber materials and the like.

In accordance with a further aspect of the present invention, the mold for the second injection molding process which is used to form the casings surrounding the junction members made by the first injection molding process also serves as an adjusting means for the bicycle frame so that no other steps for correcting the central axes of the bicycle frame is needed.

The feature of the present invention is using injection molding process twice in the manufacture of a bicycle frame to considerably reduce the power consumption, time and labor required in manufacturing and the cost while still providing a stiff structure which is hard to deform and can be colored directly.

Other objects and advantages of the invention will be apparent from the following description of preferred embodiments taken in connection with the drawings in which:

### BRIEF DESCRIPTION OF THE DRAWINGS

Fig. 1 is a side elevational view showing a bicycle frame made in accordance with the present invention;

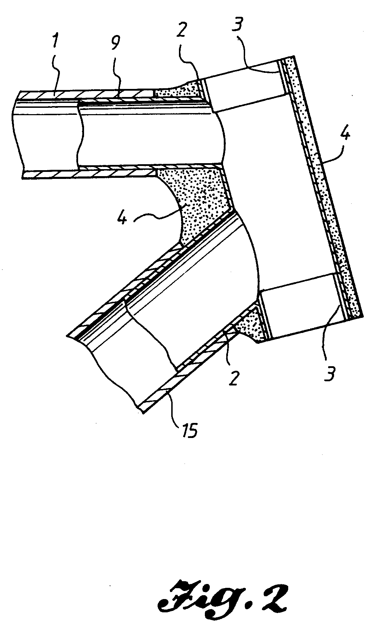

Fig. 2 is a part cross-sectional view showing the steering junction portion of the bicycle frame shown in Fig. 1;
Fig. 3 is a part cross-sectional view showing the steering junction member connected to the tubular members with rivets;
Fig. 4 is a part cross-sectional view showing the steering junction member connected to the tubular members with key-like retaining blocks;
Fig. 4A is a cross-sectional,view showing the structure of the key-like retaining blocks shown in Fig. 4 wherein the retaining blocks are spring-biased;
Fig. 4B is a cross-sectional view similar to Fig. 4A but in this case the retaining block is not spring-biased;
Fig. 5 is a part cross-sectional view showing the steering junction member threadingly connected to the tubular members;
Fig. 5C is a cross-sectional view showing in detail the threaded engagement between the members shown in Fig. 5;
Fig. 6 is a part cross-sectional view showing the steering junction member connected to the tubular members with flared ends of the tubular extensions thereof;
Fig. 6D is a cross-sectional view showing the detail of the engagement of the flared end shown in Fig. 6;

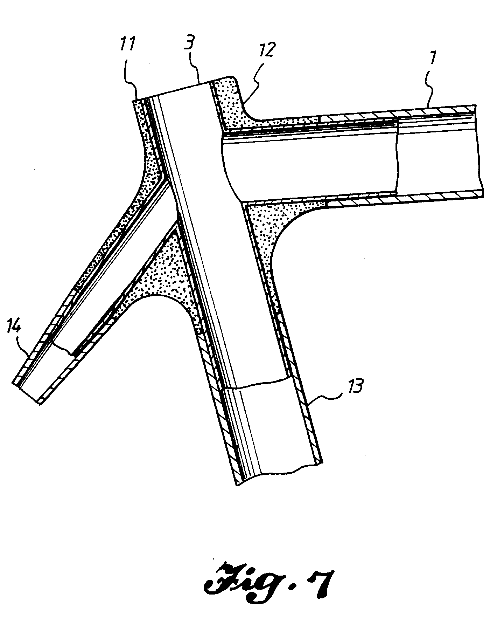

Fig. 7 is a part cross-sectional view showing the seat junction portion of the bicycle frame shown in Fig. 1;
Fig. 8 is a part cross-sectional view showing the seat junction member connected to the tubular members with rivets;
Fig. 9 is a part cross-sectional view showing the seat junction member connected to the tubular members with different ways at different joints, such as a flared end joint, a threaded joint and a keyed joint;

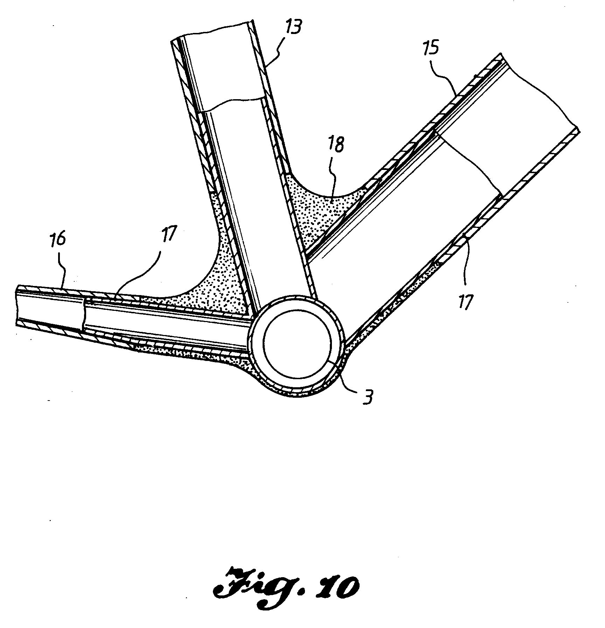

Fig. 10 is a part cross-sectional view showing the bottom bracket junction portion of the bicycle frame shown in Fig. 1;
Fig. 11 is a part cross-sectional view showing the bottom bracket junction member connected to the tubular members with rivets; and
Fig. 12 is a part cross-sectional view showing the bottom bracket junction member connected to the tubular members with different ways at different joints, such as a flared end joint, a threaded joint and a keyed joint.

### DETAILED DESCRIPTION OF THE PREFERRED EMBODIMENTS

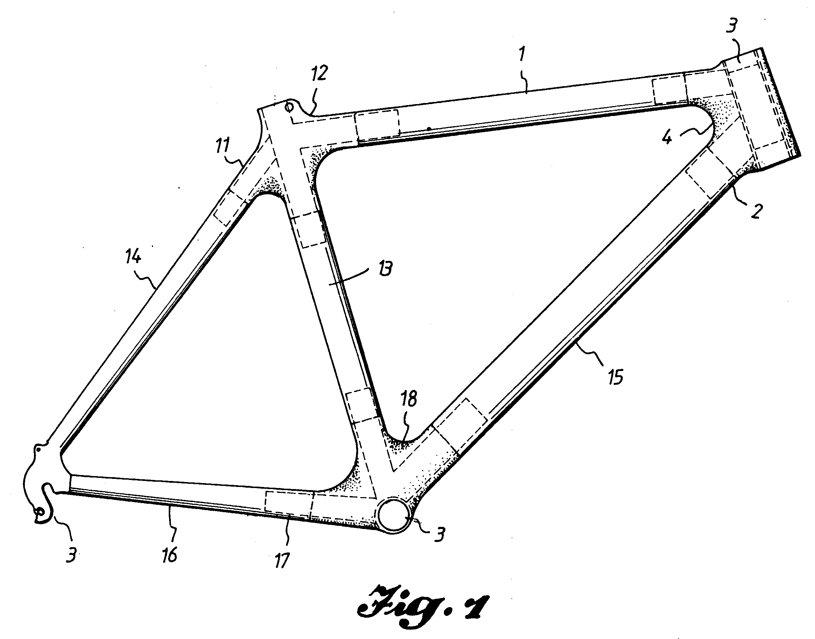

With reference to the drawings and in particular to Fig. 1 wherein a bicycle frame is shown, the bicycle frame shown in Fig. 1 comprises a three-branched steering junction member 2 which has two tubular extensions and a head lug, a four-branched junction member 11 which has three tubular extensions and a tubular seat support, and a bottom bracket junction 17 which has three tubular extensions and a pedal crank support. A top tubular member 1 connects between a tubular extension of the steering junction member 2 and a tubular extension of the seat junction member 11; a down tubular members 15 connects between a tubular extension of the steering junction member 2 and a tubular extension of the bottom bracket junction member 17; and a seat tubular member 13 connects between a tubular extension member of the seat junction member 11 and a tubular extension of the bottom bracket member 17 so as to generally form a triangle. A seat stay 14 is connected with an end thereof to a tubular extension of the seat junction member 11 and a chain stay 16 is connected with an end thereof to a tubular extension of the seat junction member 11. The other ends of the seat stay 14 and the chain stay 16 jointly form the rear fork of the bicycle frame. The configuration of the bicycle frame just described is similar to the prior art bicycle frames and no further description is needed herein.

In accordance with the present invention, the junction members of the embodiment just shown may first be separately made of a high molecular polymer composite material with an injection molding process. The tubular members 1, 13 and 15 and the chain stay 16 and the seat stay 14 are made of, for example, metals, such as aluminum alloys, Cr-Mo steels and titanium alloys, or fiber reinforced plastic composite materials, such as fiberglass reinforced plastics and carbon fiber materials. Since the seat stay 14 and the chain stay 16 have at least a portion thereof being circular, they are also referred to as tubular members hereinafter.

Suitable materials for serving as a matrix of the composite material for making the junction members include, but not limited to, high molecular plastics, high molecular rubber, high molecular alloy, liquid crystal polymers or polymer composite, such as polyamide (PA), polycarbonate (PC), polyethylene terephthalate (PET), polyoxymethylene (POM), polyphenulene sulfide (PPS), polyetherimide (PEI), polybutylene terephthalate (PBT), polyetherether ketone (PEEK), polyphenylene oxide (PPO), polysulfone (PSU), polyethersulfone (PES) mixed with a reinforcement made of non-organic fibers, such as fiberglass, boron fiber and whisker, or organic fibers, such as carbon or graphite fiber, aramid fiber and synthetic fibers, or the combinations thereof. The length of the reinforcing fibers is preferably larger than about 3 mm and more preferably between about 6 mm to about 8 mm. The wight of the reinforcing material is preferably between 10%-70% and more preferably between 30%-50% of the high molecular or polymer composite material used to make the junction members.

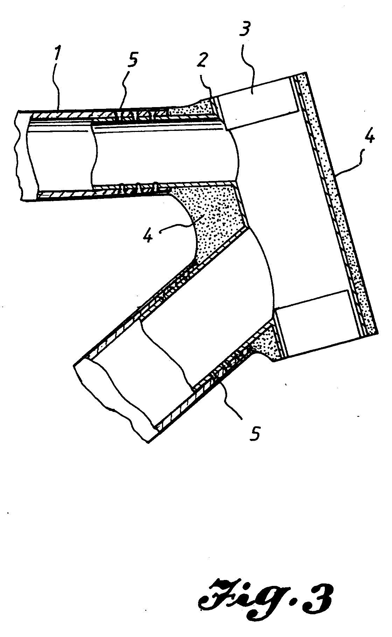

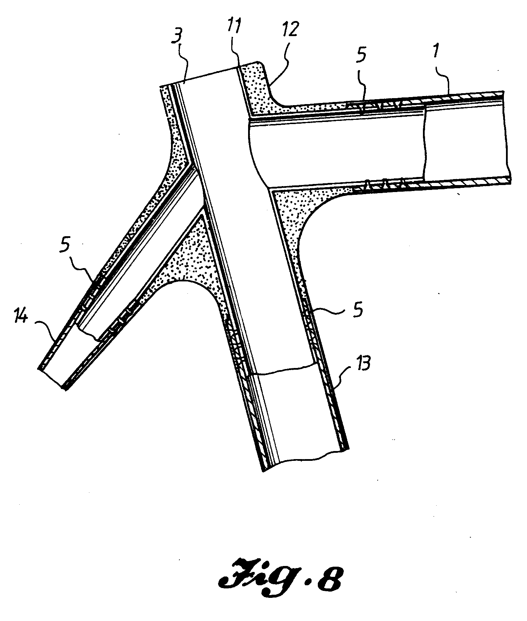

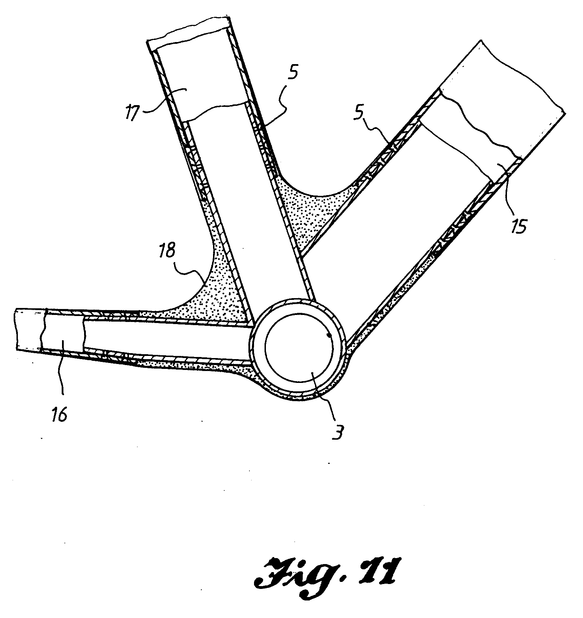

The joints between these tubular members and the junction members can be done with any known means, examples being shown in Figs. 3-6, 8, 9, 11 and 12. In the examples shown in Figs. 3, 8 and 11, the joints are done with rivets 5. In these examples, the inside diameters of the tubular members, including the seat stay and 14 the chain stay 16, are larger than the outside diameters of the associated tubular extensions of the junction members to receive therein the tubular extensions and then they are secured together with rivets generally extending along radii of the tubular members.

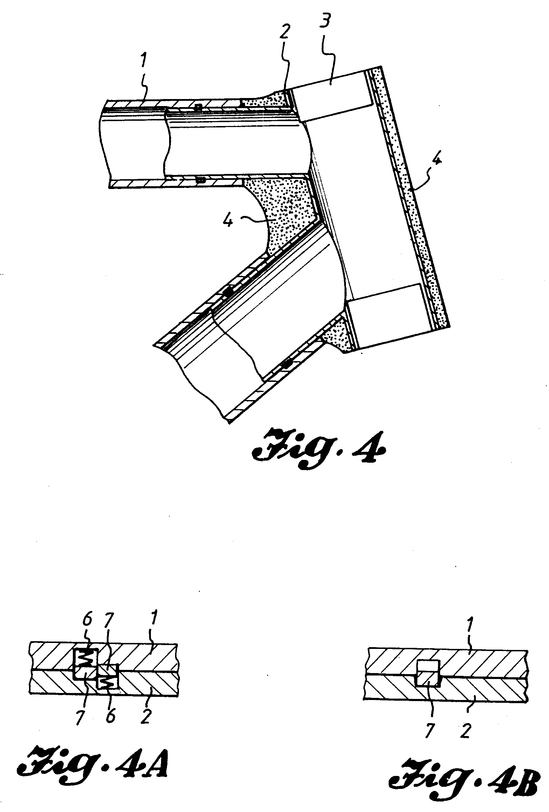

In Fig. 4, the tubular members and the junction members (steering junction member 2 in this example) are jointed together with key-like members 7 (see Figs. 4A and 4B) which are disposed partly in a recess formed on an inside surface of the tubular members and partly in a recess formed on an outside surface of the tubular extensions of the junction members. The key members 7 may be Spring-biased (Fig. 4A) or not spring-biased (Fig. 4B). In the former case, springs 6 are disposed on the recesses of the tubular members (e.g. the top tubular member 1) or the junction members (e.g. the steering junction member 2) to bias the key members 7 to partly penetrate into the recesses formed on the mating members.

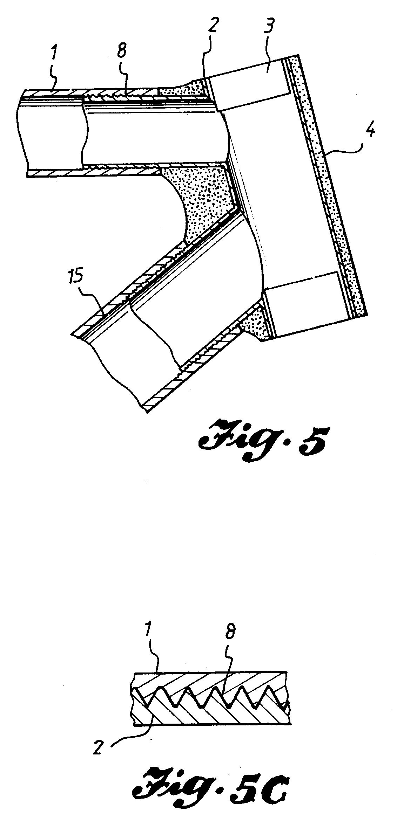

In the example shown in Fig. 5, threads 8 are provided on the interface between the junction members and the tubular members to have them threadingly engageable with each other. It is known to those skilled in the art that the directions of the threads formed on both ends of a tubular member must be of different hands. Fig. 5C shows the threaded engagement between a junction member and a tubular in an enlarged and thus more detailed way.

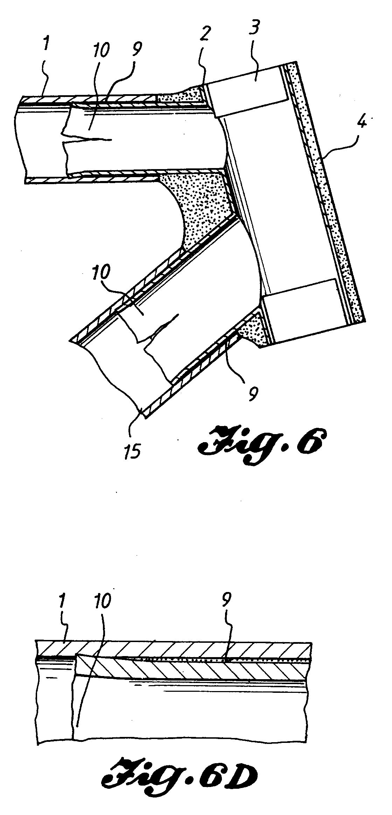

In the example shown in Fig. 6, each of the tubular extensions of the junction member (the steering junction member) has a resilient flared end which is formed by a cut along a length thereof at an end thereof and expanded outward to tightly fit into the tubular members (the top tubular member 1 and the down tubular member 15) with the resilience thereof. The ends of the tubular members that receive such flared ends may be provided with an undercut portion for easily handling.

Adhesive coatings may be provided between the contacting surfaces of the junction members and the tubular members to form a bond therebetween to joint these members together. The adhesive agent may be applied solely or in combination with other types of joint just described. For example, an adhesive coating 9 is also applied in the flared end joint shown in Fig. 6. The detail can be observed from Fig. 6D.

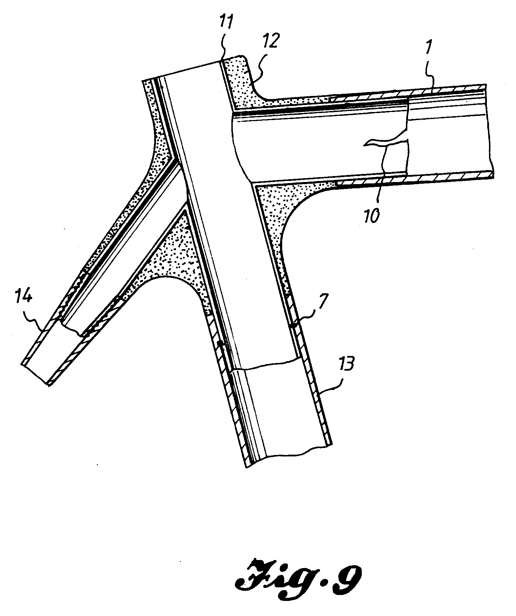

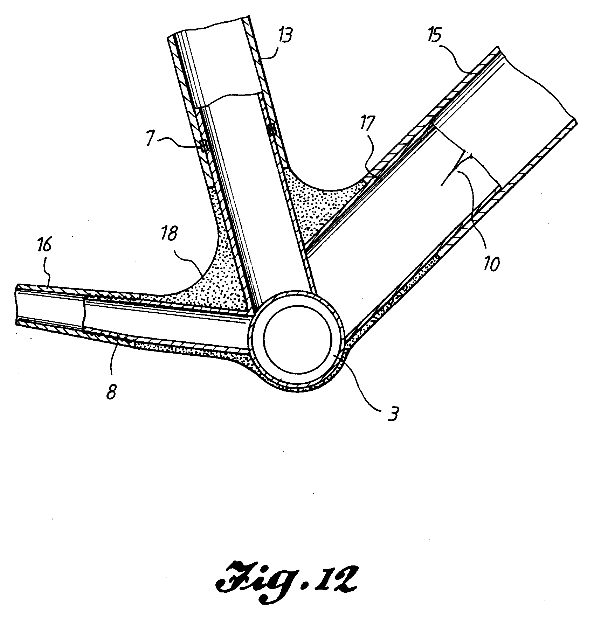

The jointing methods just described can be applied to a joint between a tubular member and a junction member solely or in combination, as such shown in Fig. 6. The joints of the bicycle frame may all be done with only one of these methods. It is also possible to applied different jointing methods to different joints of the bicycle frame, such as those shown, in Figs. 9 and 12.

Figs. 9 and 12 respectively show the joints between the seat junction member 11 and the tubular members associated therewith and the joints between the bottom bracket junction member 17 and the tubular members associated therewith. In these examples, a flared end joint, a keyed joint and a threaded joint are respectively used to connect a tubular member 1, 13 or 14 (Fig. 9) or 15, 13 or 16 (Fig. 12) to the seat junction member 11 or the bottom bracket junction member 17.

Although several methods have been just described to form joints between the tubular members and the junction members, it is understood that other methods which are not mentioned herein can also be applied.

As mentioned previously, the junction members are made separately with a first injecting molding process and then connected together by the tubular members which have been prepared separately to form the bicycle frame. In accordance with the present invention, a second injection molding process is conducted thereafter to form the casings which respectively fully cover the junction members.

In conducting the second injection molding process, the junction members are first placed in molds and then respectively covered with a similar high molecular polymer composite material or liquid crystal polymers casing, for example the casing 4 covers the steering junction member 3, the casing 12 covers the seat junction member 11 and the casing 18 covers the bottom bracket junction member 17. The injection is conducted in such a way to have the junction members completely covered by the injected material of the second injection and a smooth interface is formed between the second injected material (the casing) and the tubular members and thus providing the bicycle frame with a continue, smooth and beautiful outer surface. Preferably, the second injection molding process is conducted at a temperature slightly higher than or equal to that used in the first injection molding process in order to have the material of the second injection fused with the junction members to have them more securely stick together.

A couple of experiments, as well as a couple comparative experiments, are conducted to investigate the beneficial characteristics of the bicycle frame made in accordance with the present invention. The conditions of these experiments are list as follows with the results thereof separately listed in Tables 1 and 2 following the descriptions of the examples.

### Example 1

Plastic particles made of Nylon 66 reinforced with carbon fibers of length at least larger than 6 mm are used to form a junction member. The contents of the carbon fibers is 50% and this composite is herein referred to as Nylon66+50%CF. The processing conditions are:
Raw material drying condition: two hours at 90°C
Raw material container temperature: 280, 290 and 300°C
Nozzle temperature: 310°C
Mold temperature: 100°C
Injection pressure: 40 kg/cm²
The outside surface of a tubular extension of the junction member is coated with an adhesive layer to joint a carbon fiber reinforced epoxy tube with a diameter of 26,65 mm. The second molding injection with the same injection material is thereafter conducted.

### Example 2

This experiment is similar to Example 1 with the Nylon66+50%CF particles substituted by a liquid crystal polymer with 30% carbon fibers (hereinafter referred to as LCP+30%). The processing conditions are:
Raw material drying condition: two hours at 100°C
Raw material container temperature: 310, 330 and 350°C
Nozzle temperature: 350°C
Mold temperature: 100°C
Injection pressure: 500 kg/cm²

### Comparative Example 1

This experiment is similar to Example 1 except that the Nylon66+50%CF particles are substituted by pure Nylon 66 material. The processing conditions are:
Raw material drying condition: two hours at 80°C
Raw material container temperature: 270, 270 and 280°C
Nozzle temperature: 280°C
Mold temperature: 60°C
Injection pressure: 70 kg/cm²

### Comparative Example 2

This experiment is similar to comparative example 1 wherein the injection material is an epoxy reinforce with carbon fibers.

In the following tables, table 1 is a comparison of the property of the injection materials used in the previously-described experiments, together with the material properties of certain metals, such as aluminum, magnesium and brass. Table 2 lists certain mechanical properties of the bicycle frame made in accordance with these Examples.

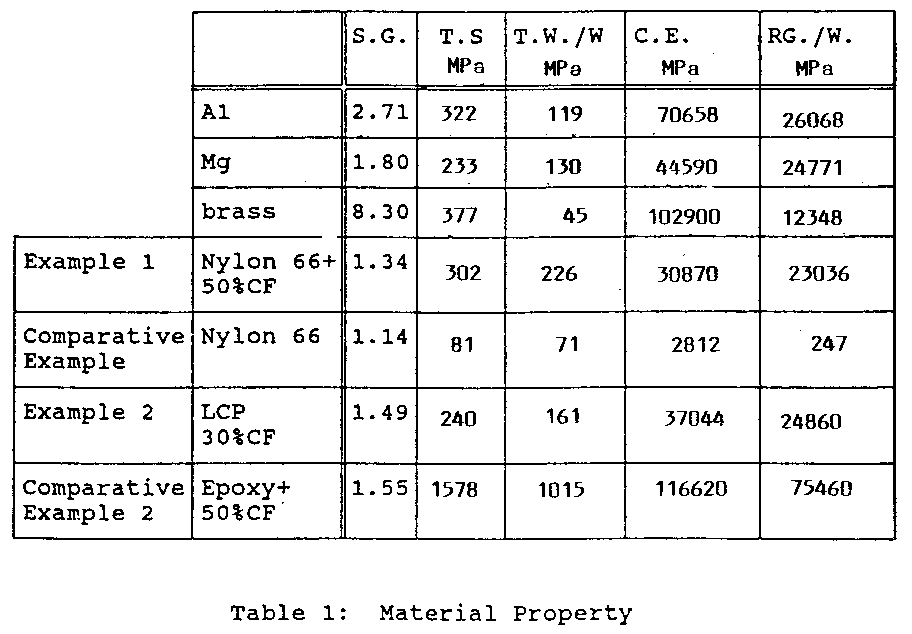

In the above table, S.G. represents specific gravity, ||T.S. stands for tensile strength, W denotes weight, C.E. i| coefficient of elasticity and RG. represents rigidity; T.S./W is the ratio of tensile strength to weight and RG./W is the ratio of rigidity to weight.

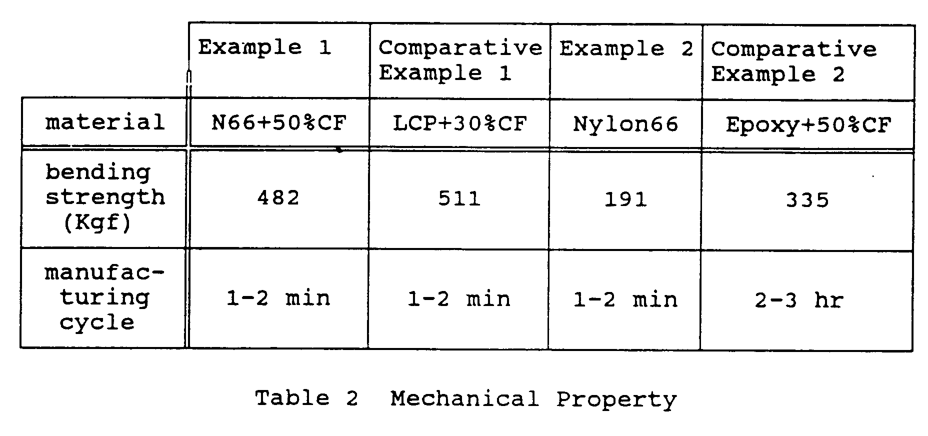

A conclusion is drawn from the above tables that (1) the junction members made in accordance with examples 1 and 2 have a strength very close to their counterparts made of the metals while having better rigidity-to-wight ratios and much stronger than those made in accordance with comparative examples 1 and 2 and (2) the bending strength of the junction members made in accordance with examples 1 and 2 is better than that made in accordance with either one of the two comparative examples. The manufacturing cycles of examples 1 and 2 are both shorter than that of comparative experiment 2. Thus the junction members made in accordance with the present invention have the superior properties of low cost, low energy consumption, high rigidity-to-weight ratio and can be mass-produced in a more efficient way than the prior art.

## Claims

1. A method for making a bicycle frame comprising:
manufacturing a plurality of junction members each of which has a plurality of tubular extensions from a polymer composite material in a first injecting molding process ;
connecting said junction members with tubular members made of a second material, each of the tubular members having at least one end to hold one of the tubular extensions with a securing means so as to form said bicycle frame; characterized in that said first injection molding process is conducted at a first temperature and
fully covering the portions of said junction members not covered by the ends of said tubular members with casings by a second injection molding process which is conducted at a second temperature slightly higher than or equal to said first temperature to have the casings and the junction members fused together.

2. A method as claimed in Claim 1 wherein said polymer composite material comprises a matrix formed by plastics, rubbers, polymer alloy or blends, liquid crystal polymers or molecular composites.

3. A method as claimed in Claim 1 wherein said polymer composite material comprises a reinforcing material of non-organic fibers, such as fiberglass, boron fiber and whisker.

4. A method as claimed in Claim 1 wherein said polymer composite material comprises a reinforcing material of organic fibers, such as carbon fiber, graphite fiber, aramid fiber and synthetic fibers.

5. A method as claimed in Claim 1 wherein said polymer composite material comprises a reinforcing material which is a combination of non-organic fibers, such as fiberglass, boron fiber and whisker, and organic fibers, such as carbon fiber, graphite fiber, aramid fiber and synthetic fibers.

6. A method as claimed in Claims 3, 4 or 5 wherein the percentage weight of the reinforcing material is between 10%-70% and preferably between 30%-50% of said polymer composite material.

7. A method as claimed in Claims 3, 4, 5 or 6 wherein said fibers of the reinforcing material have a length between 1-30 mm and preferably between 6-10 mm.

8. A method as claimed in Claim 1 wherein said junction members include two-way, three-way, four-way and five-way junction members each of which has two, three, four, and five branched tubular extensions.

9. A method as claimed in Claim 1 wherein said securing means includes adhesive agents, threads, rivets, tight fit or spring-biased or non-spring-biased keys.

10. A method as claimed in Claim 1 wherein said second material is a metal, an alloy or a polymer composite material other than the material of said junction members.

11. A method as claimed in Claim 1 wherein said at least one end of each of said tubular member has an inside diameter. slightly larger than an outside diameter of the tubular extension associated therewith to have the tubular extension tightly fit therein and wherein said securing means includes adhesive agents, threads, rivets, or spring-biased or non-spring-biased keys, said casings being injection-molded in such a way to form a smooth interface with an outside surface of the tubular members.

12. A bicycle frame comprising:
a plurality of injection molded junction members (2,11,17) made of a polymer composite material, each of the junction members (2,11,17) having a plurality of tubular extensions;
a plurality of tubular members (1,13-16) made of a second material, each of the tubular members (1,13-16) having at least one end to hold one of the tubular extensions with a securing means (5,7-10) so as to form said bicycle frame; characterized by
a plurality of casings (4,11,12,18) respectively injection molded over and fully covering the portions of the junction members (2,11,17) not covered by the ends of said tubular members (1,13-16), said casings being fused to said junction members (2,11,17).

13. A bicycle frame as claimed in Claim 12 wherein said polymer composite material comprises a matrix formed by high molecular plastics, high molecular rubbers, high molecular alloy, liquid crystal polymers and polymer composites.

14. A bicycle frame as claimed in Claim 12 wherein said polymer composite material comprises a reinforcing material of non-organic fibers, such as fiberglass, boron fiber and whisker.

15. A bicycle as claimed in Claim 12 wherein said polymer composite material comprises a reinforcing material of organic fibers, such as carbon fiber, graphite fiber, aramid fiber and synthetic fibers.

16. A bicycle frame as claimed in Claim 12 wherein said polymer composite material comprises a reinforcing material which is a combination of non-organic fibers, such as fiberglass, boron fiber and whisker, and organic fibers, such as carbon fiber, graphite fiber, aramid fiber and synthetic fibers.

17. A bicycle frame as claimed in Claims 14, 15 or 16 wherein the percentage weight of the reinforcing material is between 10%-70% and preferably between 30%-50% of said polymer composite material.

18. A bicycle frame as claimed in Claims 14, 15, 16 or 17 wherein said fibers of the reinforcing material have a length between 1-30 mm and preferably between 6-10 mm.

19. A bicycle frame as claimed in Claim 12 wherein said junction members (2,11,17) include two-way, three-way, four-way and five-way junction members each of which has two, three, four, and five branched tubular extensions.

20. A bicycle frame as claimed in Claim 12 wherein said at least one end of each of said tubular members (1,13-16) has an inside surface of a diameter slightly larger than a diameter of an outside surface the tubular extension associated therewith to have the tubular extension received therein.

21. A bicycle frame as claimed in Claim 20 wherein said securing means is an adhesive agent (9) coated on an interface between the inside surface of said tubular member and the outside surface of said tubular extension.

22. A bicycle frame as claimed in Claim 20 wherein said securing means comprises a plurality of rivets (5) extending through an interface between the inside surface of said tubular member and the outside surface of said tubular extension.

23. A bicycle frame as claimed in Claim 20 wherein said securing means comprises a first threaded portion (8) formed on the inside surface of said tubular member and a second threaded portion formed on the outside surface of said tubular extension which are engageable with each other.

24. A bicycle frame as claimed in Claim 20 wherein said securing means comprises a resilient flared end (10) formed on said tubular extension to be tightly received inside the end of said tubular member.

25. A bicycle frame as claimed in Claim 20 wherein said securing means comprises at least one key (7) movably disposed on at least a recess formed on one of the tubular member and the tubular extension and partly penetrating into a counterpart recess formed on the other of the tubular member and the tubular extension to secure the tubular member and the tubular extension together.

26. A bicycle frame as claimed in Claim 12 wherein said second material is a metal, an alloy or a polymer composite material other than the material of said junction members.

## Patentansprüche

1. Verfahren zur Herstellung eines Fahrradrahmens, enthaltend:
Fertigung mehrerer Verbindungselemente, die jeweils mehrere Rohrfortsätze haben, durch einen ersten Spritzgußvorgang aus einem Polymerverbundmaterial;
Zusammenfügen dieser Verbindungselemente mit Rohrelementen, die aus einem zweiten Material gefertigt sind, wobei jedes der Rohrelemente zumindest ein Ende hat, um einen der Rohrfortsätze mit einer Befestigungseinrichtung zu halten, um den Fahrradrahmen auszubilden, dadurch gekennzeichnet, daß der erste spritzgußvorgang bei einer ersten Temperatur durchgeführt wird, und
vollständiges Umschließen der Abschnitte der Verbindungselemente, die nicht von den Enden dieser Rohrelemente umschlossen werden, mit Gehäusen durch einen zweiten Spritzgußvorgang, der bei einer zweiten Temperatur durchgeführt wird, die etwas höher oder gleich der ersten Temperatur ist, um die Gehäuse und die Verbindungselemente miteinander zu verschmelzen.

2. Verfahren nach Anspruch 1, bei dem das Polymerverbundmaterial eine Grundsubstanz enthält, die aus Kunststoff, Gummi, einer Polymer-Legierung oder -Mischung, Flüssigkristallpolymeren oder Molekularverbindungen besteht.

3. Verfahren nach Anspruch 1, bei dem das Polymerverbundmaterial ein Armierungsmaterial aus anorganischen Fasern enthält, wie etwa Fiberglas, Borfasern und Whisker.

4. Verfahren nach Anspruch 1, bei dem das Polymerverbundmaterial ein Armierungsmaterial aus organischen Fasern enthält, wie etwa Kohlefasern, Graphitfasern, Aramidfasern und synthetischen Fasern.

5. Verfahren nach Anspruch 1, bei dem das Polymerverbundmaterial ein Armierungsmaterial enthält, das eine Kombination aus anorganischen Fasern, wie etwa Fiberglas, Borfasern und Whisker und organischen Fasern, wie etwa Kohlefasern, Graphitfasern, Aramidfasern und synthetischen Fasern ist.

6. Verfahren nach Anspruch 3, 4 oder 5, bei dem der prozentuale Gewichtsanteil des Armierungsmaterials zwischen 10%-70% und vorzugsweise zwischen 30%-50% des Polymerverbundmaterials beträgt.

7. Verfahren nach Anspruch 3, 4, 5 oder 6, bei dem die Fasern des Armierungsmaterials eine Länge zwischen 1-30 mm und vorzugsweise zwischen 6-10 mm haben.

8. Verfahren nach Anspruch 1, bei dem die Verbindungselemente Zwei-, Drei-, Vier- und Fünffachverbindungselemente enthalten, von denen jedes zwei, drei, vier und fünf abzweigende Rohrfortsätze hat.

9. Verfahren nach Anspruch 1, bei dem die Befestigungseinrichtung Klebemittel, Gewinde, Bolzen, Preßpassungen oder federgespannte oder nicht federgespannte Paßfedern enthält.

10. Verfahren nach Anspruch 1, bei dem das zweite Material ein Metall, eine Legierung oder ein Polymerverbundmaterial ist, das ungleich dem Material der Verbindungselemente ist.

11. Verfahren nach Anspruch 1, bei dem zumindest ein Ende des Rohrelementes einen Innendurchmesser hat, der etwas größer ist als der Außendurchmesser des zugeordneten Rohrfortsatzes, damit der Rohrfortsatz darin fest eingepaßt ist, und bei dem die Befestigungsvorrichtung Klebemittel, Gewinde, Bolzen, Preßpassungen oder federgespannte oder nicht federgespannte Paßfedern enthält, wobei die Gehäuse derart vergossen sind, daß sie einen glatten Übergang mit einer Außenoberfläche der Rohrelemente bilden.

12. Fahrradrahmen, enthaltend:
mehrere Spritzgußverbindungselemente (2, 11, 17) aus einen Polymerverbundmaterial, wobei jedes der Verbindungselemente (2, 11, 17) mehrere Rohrfortsätze hat;
mehrere Rohrelemente (1, 13-16) aus einem zweiten Material, wobei jedes der Rohrelemente (1, 13-16) zumindest ein Ende hat, um einen der Rohrfortsätze mit einer Befestigungsvorrichtung (5, 7-10) derart zu halten, daß ein Fahrradrahmen ausgebildet wird; gekennzeichnet durch
mehrere Gehäuse (4, 11, 12, 18), die jeweils über die Abschnitte der Verbindungselemente (2, 11, 17), die nicht von den Enden der Rohrelemente (1, 13-16) umschlossen werden, spritzgegossen sind und diese vollständig umschließen, wobei diese Gehäuse die Verbindungselemente (2, 11, 17) sind.

13. Fahrradrahmen nach Anspruch 12, bei dem das Polymerverbundmaterial eine Grundsubstanz enthält, die aus hochmolekularen Kunststoffen, hochmolekularen Gummis, hochmolekularen Legierungen, Flüssigkristallpolymeren und Polymerverbindungen besteht.

14. Fahrradrahmen nach Anspruch 12, bei dem das Polymerverbundmaterial ein Armierungsmaterial aus anorganischen Fasern, wie etwa Fiberglas, Borfasern und Whisker enthält.

15. Fahrradrahmen nach Anspruch 12, bei dem das Polymerverbundmaterial ein Armierungsmaterial aus organischen Fasern enthält, wie etwa Kohlefasern, Graphitfasern, Aramidfasern und synthetischen Fasern.

16. Fahrradrahmen nach Anspruch 12, bei dem das Polymerverbundmaterial ein Armierungsmaterial enthält, das eine Kombination aus anorganischen Fasern, wie etwa Fiberglas, Borfasern und Whisker und organischen Fasern, wie etwa Kohlefasern, Graphitfasern, Aramidfasern und synthetischen Fasern ist.

17. Fahrradrahmen nach Anspruch 14, 15 oder 16, bei dem der prozentuale Gewichtsanteil des Armierungsmaterials zwischen 10%-70% und vorzugsweise zwischen 30%-50% des Polymerverbundmaterials beträgt.

18. Fahrradrahmen nach Anspruch 14, 15, 16 oder 17, bei dem die Fasern des Armierungsmaterials eine Länge zwischen 1-30 mm und vorzugsweise zwischen 6-10 mm haben.

19. Fahrradrahmen nach Anspruch 12, bei dem die Verbindungselemente (2, 11, 17) Zwei-, Drei-, Vier- und Fünffachverbindungselemente enthalten, von denen jedes zwei, drei, vier und fünf abzweigende Rohrfortsätze hat.

20. Fahrradrahmen nach Anspruch 12, bei dem zumindest ein Ende jedes Rohrelementes (1, 13-16) eine Innenoberfläche mit einem Durchmesser hat, der etwas größer ist als ein Durchmesser einer Außenoberfläche des Rohrfortsatzes, der diesem zugeordnet ist, um den Rohrfortsatz darin aufzunehmen.

21. Fahrradrahmen nach Anspruch 20, bei dem die Verbindungseinrichtung ein Klebemittel (19) ist, das auf einer Verbindungsfläche zwischen der Innenoberfläche des Rohrelementes und der Außenoberfläche des Rohrfortsatzes aufgebracht ist.

22. Fahrradrahmen nach Anspruch 20, bei dem die Befestigungseinrichtung mehrere Bolzen (5) enthält, die durch eine Verbindungsfläche zwischen der Innenoberfläche des Rohrelementes und der Außenoberfläche des Rohrfortsatzes laufen.

23. Fahrradrahmen nach Anspruch 20, bei dem die Befestigungseinrichtung einen ersten Gewindeabschnitt (8), der auf der Innenoberfläche des Rohrelementes ausgebildet ist, und einen zweiten, mit dem ersten in Eingriff bringbaren Gewindeabschnitt enthält, der auf der Außenoberfläche des Rohrfortsatzes ausgebildet ist.

24. Fahrradrahmen nach Anspruch 20, bei dem die Befestigungseinrichtung ein federndes, konisch erweitertes Ende (10) enthält, das an dem Rohrfortsatz ausgebildet ist, um im Ende des Rohrelementes fest aufgenommen zu werden.

25. Fahrradrahmen nach Anspruch 20, bei dem die Befestigungseinrichtung zumindest eine Paßfeder (7) enthält, die beweglich an zumindest einer Aussparung angeordnet ist, die an dem Rohrelement oder dem Rohrfortsatz ausgebildet ist und teilweise in eine entsprechende Aussparung ragt, die an dem Rohrfortsatz bzw. dem Rohrelement ausgebildet ist, um das Rohrelement und den Rohrfortsatz miteinander zu verbinden.

26. Fahrradrahmen nach Anspruch 12, bei dem das zweite Material ein Metall, eine Legierung oder ein Polymerverbundmaterial ist, anders als das Material der Verbindungselemente.

## Revendications

1. Procédé de fabrication d'un cadre de bicyclette comprenant :
la fabrication d'une pluralité d'organes de jonction, chacun d'entre eux ayant une pluralité de prolongements tubulaires, en matériau composite polymère dans un premier procédé de moulage par injection;
la connexion desdits organes de jonction à des organes tubulaires constitués d'un deuxième matériau, chacun des organes tubulaires ayant au moins une extrémité pour maintenir l'un des prolongements tubulaires à l'aide d'un moyen de fixation, de manière à former ledit cadre de bicyclette; caractérisé en ce que ledit premier procédé de moulage par injection est conduit à une première température et
le revêtement complet des partie desdits organes de jonction non recouvertes par les extrémités desdits organes tubulaires, par des enveloppes, au moyen d'un deuxième procédé de moulage par injection, est effectué à une deuxième température légèrement supérieure ou égale à ladite première température, afin que les enveloppes et les organes de jonction soient liés par fusion.

2. Procédé selon la revendication 1, dans lequel ledit matériau composite polymère comprend une matrice constituée de matières plastiques, de caoutchoucs, d'un alliage ou de mélanges de polymères, de polymères de cristaux liquides ou de composites moléculaires.

3. Procédé selon la revendication 1, dans lequel ledit matériau composite polymère comprend un matériau de renforcement en fibres non organiques, telles que de la fibre de verre, de la fibre de bore et une barbe.

4. Procédé selon la revendication 1, dans lequel ledit matériau composite polymère comprend un matériau de renforcement constitué de fibres organiques, telles qu'une fibre de carbone, une fibre de graphite, une fibre d'aramide et des fibres synthétiques.

5. Procédé selon la revendication 1, dans lequel ledit matériau composite polymère comprend un matériau de renforcement qui est une combinaison de fibres non organiques, telles que des fibres de verre, des fibres de bore et des barbes, et de fibres organiques, telles que des fibres de carbone, des fibres de graphite, des fibres d'aramide et des fibres synthétiques.

6. Procédé selon les revendications 3, 4 ou 5, dans lequel le pourcentage en poids du matériau de renforcement est compris dans la plage allant de 10 à 70 % et, de préférence, allant de 30 à 50 % dudit matériau composite polymère.

7. Procédé selon la revendication 3, 4, 5 ou 6, dans lequel lesdites fibres du matériau de renforcement ont une longueur comprise entre 1 et 30 mm et, de préférence, entre 6 et 10 mm.

8. Procédé selon la revendication 1, dans lequel lesdits organes de jonction comprennent des organes de jonction à deux voies, trois voies, quatre voies et cinq voies, chacun d'entre eux ayant deux, trois, quatre et cinq prolongements tubulaires ramifiés.

9. Procédé selon la revendication 1, dans lequel ledit moyen de fixation comprend des agents adhésifs, des filetages, des rivets, un ajustement serré ou des clavettes sollicitées élastiquement ou non sollicitées élastiquement.

10. Procédé selon la revendication 1, dans lequel ledit deuxième matériau est un métal, un alliage ou un matériau composite polymère autre que le matériau desdits organes de jonction.

11. Procédé selon la revendication 1, dans lequel ladite au moins une extrémité de chacun desdits organes tubulaires présente un diamètre intérieur légèrement supérieur au diamètre extérieur du prolongement tubulaire lui étant associé, afin que le prolongement tubulaire y soit monté avec ajustement serré et dans lequel ledit moyen de fixation comprend des agents adhésifs, des filetages, des rivets ou des clavettes sollicitées élastiquement ou non sollicitées élastiquement, lesdites enveloppes étant moulées par injection, de manière à former une interface lisse avec une surface extérieure des organes tubulaires.

12. Cadre de bicyclette comprenant :
une pluralité d'organes de jonction (2, 11, 17) moulés par injection, constitués d'un matériau composite polymère, chacun des organes de jonction (2, 11, 17) ayant une pluralité de prolongements tubulaires;
une pluralité d'organes tubulaires (1, 13 à 16) constitués d'un deuxième matériau, chacun des organes tubulaires (1, 13 à 16) ayant au moins une extrémité pour obtenir l'un des prolongements tubulaires à l'aide d'un moyen de fixation (5, 7 à 10), de manière à former ledit cadre de bicyclette; caractérisé par
une pluralité d'enveloppes (4, 11, 12, 18) moulées respectivement par injection sur et recouvrant complètement les parties des organes de jonction (2, 11, 17) qui ne sont pas recouvertes par les extrémités desdits organes tubulaires (1, 13 à 16), lesdites enveloppes étant liées, par fusion, auxdits organes de jonction (2, 11, 17).

13. Cadre de bicyclette selon la revendication 12, dans lequel ledit matériau composite polymère comprend une matrice formée par des matières plastiques à poids moléculaire élevé, des caoutchoucs à poids moléculaire élevé, un alliage à poids moléculaire élevé, des polymères de cristaux liquides et des composites polymères.

14. Cadre de bicyclette selon la revendication 12, dans lequel ledit matériau composite polymère comprend un matériau de renforcement constitué de fibres non organiques, telles que des fibres de verre, des fibres de bore et des barbes.

15. Bicyclette selon la revendication 12, dans laquelle ledit matériau composite polymère comprend un matériau de renforcement constitué de fibres organiques, telles que des fibres de carbone, des fibres de graphite, des fibres d'aramide et des fibres synthétiques.

16. Cadre de bicyclette selon la revendication 12, dans lequel ledit matériau composite polymère comprend un matériau de renforcement qui est une combinaison de fibres non organiques, telles que des fibres de verre, des fibres de bore et des barbes, et de fibres organiques, telles que des fibres de carbone, des fibres de graphite, des fibres d'aramide et des fibres synthétiques.

17. Cadre de bicyclette selon la revendication 14, 15 ou 16, dans lequel le pourcentage en poids du matériau de renforcement est compris entre 10 et 70 % et, de préférence, entre 30 et 50 % dudit matériau composite polymère.

18. Cadre de bicyclette selon la revendication 14, 15, 16 ou 17, dans lequel lesdites fibres du matériau de renforcement présentent une longueur comprise entre 1 et 30 mm et, de préférence, entre 6 et 10 mm.

19. Cadre de bicyclette selon la revendication 12, dans lequel lesdits organes de jonction (2, 11, 17) comprennent des organes de jonction à deux voies, trois voies, quatre voies et cinq voies, chacun d'entre eux ayant deux, trois, quatre et cinq prolongements tubulaires ramifiés.

20. Cadre de bicyclette selon la revendication 12, dans lequel ladite au moins une extrémité de chacun desdits organes tubulaires (1, 13 à 16) présente une surface intérieure ayant un diamètre légèrement supérieur au diamètre d'une surface extérieure du prolongement tubulaire lui étant associé, afin que le prolongement tubulaire y soit logé.

21. Cadre de bicyclette selon la revendication 20, dans lequel ledit moyen de fixation est un agent adhésif (19) revêtu sur une interface entre la surface intérieure dudit organe tubulaire et la surface extérieure dudit prolongement tubulaire.

22. Cadre de bicyclette selon la revendication 20, dans lequel ledit moyen de fixation comprend une pluralité de rivets (5) traversant une interface entre la surface intérieure dudit organe tubulaire et la surface extérieure dudit prolongement tubulaire.

23. Cadre de bicyclette selon la revendication 20, dans lequel ledit moyen de fixation comprend une première partie filetée (8) formée sur la surface intérieure dudit organe tubulaire et une deuxième partie filetée formée sur la surface extérieure dudit prolongement tubulaire, qui sont engageables entre elles.

24. Cadre de bicyclette selon la revendication 20, dans lequel ledit moyen de fixation comprend une extrémité évasée (10) élastique formée sur ledit prolongement tubulaire, pour être logée avec ajustement serré dans l'extrémité dudit organe tubulaire.

25. Cadre de bicyclette selon la revendication 20, dans lequel ledit moyen de fixation comprend au moins une clavette (7) disposée déplaçable sur au moins une cavité formée sur l'un parmi l'organe tubulaire et le prolongement tubulaire et pénétrant en partie dans une cavité formant contrepartie, formée sur l'autre élément parmi l'organe tubulaire et le prolongement tubulaire, pour fixer ensemble l'organe tubulaire et le prolongement tubulaire.

26. Cadre de bicyclette selon la revendication 12, dans lequel ledit deuxième matériau est un métal, un alliage ou un matériau composite polymère autre que le matériau desdits organes de jonction.
